# EUROPEAN PATENT APPLICATION

(11) **EP 3 291 111 A1**
(43) Date of publication of application: **07.03.2018**
(21) Application number: 17193292.4
(22) Date of filing: 30.09.2010
(51) Int. Cl.: G06F 17/30

(54) **SYSTEMS AND METHODS FOR PROVIDING MEDIA POOLS IN A COMMUNICATIONS NETWORK**

(30) Priority: 01.10.2009 US 571920
(62) Divisional of application: 10763564.1
(71) Applicant: Apple Inc., Cupertino, CA 95014 (US)
(72) Inventor: ROTTLER, Benjamin, Cupertino, CA 95014 (US); FINO, Jorge, Cupertino, CA 95014 (US); WOOD, Policarpo, Cupertino, CA 95014 (US)
(74) Representative: Wardle, Callum Tarn

(57) **Abstract**

A server located in a communications network for providing a stream of media items, the server comprising: a processor configured to cause the server to: identify a media pool in the communications network, wherein the media pool comprises a first media item of a first electronic device and a second media item of a second electronic device; receive a stream of the first media item from the first electronic device; provide the stream of the first media item to a user; detect if the first electronic device has moved out of the range of the communications network; and in response to detecting that the first electronic device has moved out of the range of the communications network, locate an alternative source for the first media item.

## Description

### Field of the Invention

This is directed to providing media pools in a communications network.

### Background of the Disclosure

Today's electronic devices, such as laptop and desktop computers and portable media players, can include libraries of media items. Users can select to play back a subset of media items in the library using these electronic devices. For example, users can create personalized playlists that can include a subset of the media items in the library.

Current electronic devices, however, are generally limited to playing back media items that are locally stored in memory or that are streamed from a remote source (e.g., a remote server). For example, an electronic device may be capable of playing back media files that have been stored to memory. As another example, an electronic device may be capable of receiving a media stream from a remote server and presenting the media stream to a user. Therefore, a user of an electronic device typically has a limited number of options for accessing media items that are stored on other devices located in the same communications network as the electronic device.

### Summary of the Disclosure

Systems, methods, and machine-readable media are disclosed for providing media pools in a communications network. The media pools may be provided by any suitable media source in the communications network, such as an electronic device or a server in the communications network.

An electronic device can include a media pool application that can generate a media pool (e.g., a temporary media pool) by first identifying other electronic devices in the communications network. After identifying the media sources, the media pool application can identify one or more media items locally stored on each of the electronic devices. The media pool application can then generate a media pool comprising one or more of the identified media items. For example, the media pool application can generate the media pool by matching metadata of the identified media items. In some embodiments, the media pool application can generate a description of the media pool based on one or more of the metadata of the identified media items, information obtained from a server, and/or an online source.

After generating the media pool, the media pool application can stream a media item of the media pool. For example, the media pool application can determine which media item to stream based on media rankings associated with the media items. After determining the media item, the media pool application can stream the media item to the other electronic devices of the media pool. Thus, the media pool application can stream a media item on demand by receiving requests from one or more electronic devices of the media pool. In other embodiments, the media pool application can provide multiple streams to the electronic devices in the media pool.

In some embodiments, the media pool application can provide a user with an option to view all media items in a media pool. The media pool application can then perform one or more actions in response to receiving one or more user instructions (e.g., one or more user selections). For example, in response to receiving a user instruction to play back a media item, the media pool application can play back the media item of the media pool. As another example, in response to receiving a user instruction to add a media item not located on the electronic device and/or a server, the media pool application can add the media item to the electronic device and/or the server.

In some embodiments, the media pool application can generate media pools (e.g., static media pools) that include media from one or more servers. For example, a server in a media pool can provide a stream of a media item to one or more electronic devices in a media pool. In addition, the server can manage one or more attributes of the media pool (e.g., members of the media pool, media items of the media pool, one or more pre-determined thresholds of the media pool, and the like).

In some embodiments, the server can detect if an electronic device has left the media pool. For example, an electronic device may have moved out of the range of the communications network or may have exited the media pool. In response to detecting that the electronic device has left the media pool, the server can attempt to locate media items associated with the electronic device on one or more alternative sources (e.g., a media library on the server, another electronic device, and/or an online source).

In some embodiments, the server may buffer a media item that is currently being streamed. If the electronic device associated with the media item then leaves the media pool, the server can continue to stream the buffered media item to the other electronic devices in the media pool.

### Brief Description of the Drawings

The above and other aspects and advantages of the present invention will be apparent upon consideration of the following detailed description, taken in conjunction with accompanying drawings, in which like reference characters refer to like parts throughout, and in which:
FIG. 1 is a schematic view of a client-server communications network in accordance with various embodiments of the invention;
FIG. 2 is a schematic view of a multi-device communications network in accordance with various embodiments of the invention;
FIG. 3 is a schematic view of an electronic device in accordance with various embodiments of the invention;
FIG. 4 shows a display screen of an illustrative top level menu of a media pool application in accordance with various embodiments of the invention;
FIG. 5 shows a display screen for providing current media pools of a media pool application in accordance with various embodiments of the invention;
FIG. 6 shows a display screen for providing a stream of a media item of a media pool application in accordance with various embodiments of the invention;
FIG. 7 shows a display screen associated with an add option of a media pool application in accordance with various embodiments of the invention;
FIG. 8 shows a display screen associated with a view playlist option of a media pool application in accordance with various embodiments of the invention;
FIG. 9 shows a display screen associated with a playlist item of a media pool application in accordance with various embodiments of the invention;
FIG. 10 shows a display screen associated with a view all items option of a media pool application in accordance with various embodiments of the invention;
FIG. 11 shows a display screen associated with a view all items option of a media pool application, similar to FIG. 10, after an electronic device has left a media pool in accordance with various embodiments of the invention;
FIG. 12 shows a display screen for providing candidate media pools of a media pool application in accordance with various embodiments of the invention;
FIG. 13 shows a display screen for providing candidate media pools of a media pool application, similar to FIG. 12, displaying a description of a media pool in accordance with various embodiments of the invention;
FIG. 14 shows a display screen for providing candidate media pools, similar to FIGS. 12 and 13, providing additional candidate media pools in accordance with various embodiments of the invention;
FIG. 15 shows a display screen for editing a candidate media pool of a media pool application in accordance with various embodiments of the invention;
FIG. 16 shows a display screen for managing media pools of a media pool application in accordance with various embodiments of the invention;
FIG. 17 shows a display screen for providing one or more settings options of a media pool application in accordance with various embodiments of the invention;
FIG. 18 shows a flowchart of an illustrative process for providing a stream of media items in accordance with various embodiments of the invention; and
FIGS. 19A and 19B show flowcharts of an illustrative process for providing one or more candidate media pools in accordance with various embodiments of the invention.

### Detailed Description

Systems, methods, and machine-readable media (e.g., computer-readable media) are disclosed for providing media pools in a communications system.

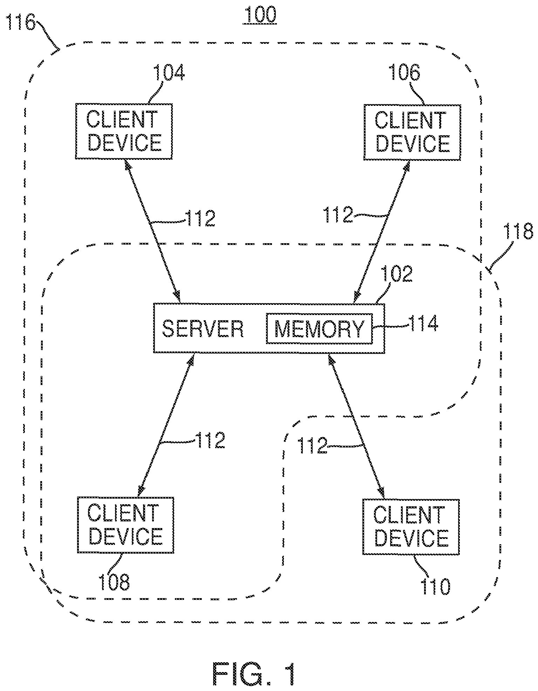

FIG. 1 is a schematic view of illustrative client-server communications network 100 in accordance with various embodiments of the invention. Communications network 100 can include server 102 and client devices 104, 106, 108, and 110. Although FIG. 1 only shows one server and four client devices, persons skilled in the art will appreciate that this is merely illustrative and that communications network 100 can include any suitable number of servers and client devices.

Server 102 may include any suitable types of servers that can store and provide data to client devices 104, 106, 108, and 110 (e.g., file server, database server, web server, or media server). In some embodiments, server 102 can be a media playback dock (e.g., server 102 can include speakers and output circuitry) that can stream and/or provide media items to client devices 104, 106, 108, and 110.

Server 102 can store media items and other data (e.g., metadata associated with the media items). In addition, server 102 can receive requests from client devices 104, 106, 108, and 110 to obtain data. For example, server 102 can receive requests from a client device to obtain media items, such as one or more songs, videos, or pictures, and any metadata associated with the media items (e.g., a hyperlink to preview or purchase a music item, genre, artist, album, album cover art, release date, bits per minute (BPM) information, producer, song writer, keywords, tags, lyrics, vocals, bass line information, or media ranking associated with a music item). The requests may include requests to download or stream the media item, or requests to download metadata without the media item. Responsive to these requests, server 102 can locate and provide the requested songs and/or the metadata associated with the songs.

Server 102 can communicate with client devices 104, 106, 108, and 110 over communications link 112. Communications link 112 can include any suitable wired or wireless communications link, or combinations thereof, by which data may be exchanged between server 102 and client devices 104, 106, 108, and 110. For example, communications link 112 can include a satellite link, a fiber-optic link, a cable link, an Internet link, or any other suitable wired or wireless link. Communications link 112 may enable data transmission using any suitable communications protocol supported by the medium of communications link 112. Such communications protocols may include, for example, Wi-Fi (e.g., a 802.11 protocol), Ethernet, Bluetooth (registered trademark), radio frequency systems (e.g., 900 MHz, 2.4 GHz, and 5.6 GHz communication systems), infrared, TCP/IP (e.g., and the protocols used in each of the TCP/IP layers), HTTP, BitTorrent, FTP, RTP, RTSP, SSH, any other communications protocol, or any combination thereof.

Client devices 104, 106, 108, and 110 can include any electronic devices capable of communicating with server 102. For example, client devices 104, 106, 108, and 110 can include portable media players, cellular telephones, pocket-sized personal computers, personal digital assistances (PDAs), desktop computers, laptop computers, and other devices capable of communicating via wires or wirelessly (with or without the aid of a wireless enabling accessory device).

In some embodiments, server 102 can obtain and process data from one or more of the client devices in communications network 100. For example, server 102 can receive metadata of a media item from a client device in communications network 100 (e.g., client devices 104, 106, 108, or 110). Server 102 can then locate the media item either locally (e.g., on a media library on server 102) or using an online source (e.g., an online music store such as iTunes™ made available by Apple Inc.). After locating the media item, server 102 can stream the media item to one or more client devices in communications network 100. As another example, server 102 can be configured to receive a media item directly from a client device in communications network 100. For instance, server 102 can download a copy of the media item to memory 114. Upon receiving the media item, server 102 can stream the media item to one or more of the client devices in communications network 100. As yet another example, server 102 can receive a request from a client device in communications network 100 to add a media item to a media library in memory 114. In response to receiving the request, server 102 can locate the media item on either a client device in communications network 100 or an online source. After locating the media item, server 102 can download the media item to the media library in memory 114.

In some embodiments, server 102 can manage one or more media pools accessible by one or more client devices in communications network 100. Each media pool can include media items located on one or more media sources in communications network 100 (e.g., client device 104, client device 106, client device 108, client device 110, server 102, and/or an online source). For example, communications network 100 can have a first media pool 116 that can include client device 104, client device 106, client device 108, and server 102. In addition, communications network 100 can also have a second media pool 118 that can include client device 108, client device 110, and server 102. It will be understood that these examples are merely illustrative and that any combination of client devices and server 102 can be used to form a media pool. It will also be understood that communications network 100 can include any suitable number of media pools. For the sake of simplicity, however, only two media pools are shown in FIG. 1.

Server 102 can operate in one or more modes. For example, in a streaming mode, server 102 can select one or more media items of the media pool to stream to client devices that are currently in the media pool. In some embodiments, server 102 can select which media item to stream based on one or more media rankings associated with the media items. In other embodiments, the media pool application can provide multiple streams to electronic devices in the media pool. In such a configuration, each stream can be accessed by a different set of electronic devices.

As another example, in a playback mode, server 102 can provide a list of all the media items of the media pool to client devices that are currently in the media pool. In response to receiving a request from a client device to play back a media item in the list, server 102 can provide the media item to the client device (e.g., by transferring the media item to the client device or by streaming the media item to the client device). In some embodiments, server 102 can simultaneously operate in multiple modes. For example, server 102 can stream a media item to client devices 104 and 106 in media pool 116, while also transferring the same media item or a different media item to client device 108.

In some embodiments, server 102 can manage lists of client devices (e.g., lists of client device identifiers) that have permission to access the media pools in communications network 100. For example, upon receiving a request from a client device to access a media pool, server 102 can determine whether the client device has permission to access the media pool. Server 102 can, for instance, obtain an identifier of the client device and attempt to locate the identifier in a list of client device identifiers for the media pool. Server 102 can obtain an identifier of a client device using any suitable approach, such as, for example, an Internet Protocol ("IP") address, a network card address such as a Media Access Control ("MAC") address, or a unique identifier that a client device transmits when the device first moves within the range of communications network 100. In other embodiments, server 102 can request a username and/or password from a client device before allowing the client device to access a media pool.

In response to determining that the client device has permission to access the media pool, server 102 can allow the client device to join the media pool. For example, if server 102 receives a streaming request from the client device, server 102 can operate in the streaming mode by streaming one or more media items to the client device. As another example, if server 102 receives a playback request from the client device, server 102 can operate in the playback mode by providing a list of all the media items of the media pool. If server 102 then receives a request to play back a media item in the list, server 102 can provide the media item to the client device.

Server 102 can manage metadata associated with each media item in a media pool. For example, server 102 can maintain a media ranking associated with each media item. Server 102 can determine the media ranking based on one or more requests. For example, server 102 may receive a request from a client device to decrease the ranking of a media item. The request may, for instance, be transmitted to server 102 as a message. The message may include a header that uniquely identifies the media item and the client device and a body that includes a request to decrease the ranking of the media item. The request may include any suitable requests, including, for example, a request that decreases a star rating associated with the media item or a request to move the media item to a lower position in a media pool playlist (e.g., a playlist specifying an order for streaming media items of the media pool to the user). In response to receiving the request, server 102 can decrease the media ranking associated with the media item (e.g., decrease the media ranking by one). Server 102 can similarly increase the media ranking associated with a media item in response to receiving one or more requests to increase the ranking of the media item (e.g., increase the media ranking by one). Thus, server 102 can stream a media item on demand by receiving requests from one or more electronic devices of the media pool.

Persons skilled in the art will appreciate that in addition to receiving requests from one or more client devices, server 102 can receive inputs from any other suitable source such as, for example, an online source (e.g., a music store or an Internet website). For example, server 102 can determine the popularity of a media item from an online source. Server 102 can convert the popularity of the media item to a corresponding increase or decrease in media ranking.

In some embodiments, server 102 can perform one or more actions in response to determining that the media ranking of a media item has reached a pre-determined threshold. For example, in response to determining that the media ranking of a media item has decreased below a removal threshold, server 102 can remove the media item from the media pool. As another example, in response to determining that the media ranking of a media item has increased above an increase position threshold, server 102 can move the media item to a higher position in a media pool playlist. Similarly, in response to determining that the media ranking of a media item has decreased below a decrease position threshold, server 102 can move the media item to a lower position in the media pool playlist.

Server 102 can monitor client devices that are currently in a media pool. In addition, server 102 can detect when one or more client devices have left the media pool. Server 102 can use any suitable approach to detect when one or more client devices have moved out of the range of communications network 100. For example, server 102 can continuously monitor whether an identifier of a client device can be detected. Thus, in response to determining that the identifier of the client device can no longer be detected, server 102 can determine that the client device has moved out of the range of communications network 100. As another example, server 102 can detect that a client device has moved out of the range of communications network 100 by receiving an "EXIT" request from the client device.

In some embodiments, in response to detecting that a client device has left a media pool, server 102 can attempt to locate an alternative source for media items that are associated with the client device that left. Server 102 can locate a copy of the media items on any suitable media source, such as, for example, a media library stored in memory 114 of server 102, another client device in the media pool, another client device in communications network 100, an online source, advertisement supported streams, and/or any combination thereof.

In some embodiments, server 102 can buffer a media item that is currently being streamed to the client devices in a media pool. Thus, if server 102 is currently streaming a media item from client device 104 in media pool 116, server 102 can simultaneously buffer the media item in memory 114. If client device 104 then leaves media pool 116, server 102 can continue to stream the buffered media item to client devices 106 and 108. The streaming of the media item can therefore appear uninterrupted to users of client devices 106 and 108.

In some embodiments, if a client device has left a media pool, server 102 can transmit an updated status of one or more media items associated with the client device that left to other client devices in the media pool. For example, server 102 can transmit a message indicating one or more expiration times of the one or more media items. For instance, if server 102 temporarily obtained a copy of a media item associated with the client device (e.g., from an alternative source or from a buffer in memory 114), server 102 can indicate the amount of time remaining before the copy is removed from the media pool. As another example, server 102 can transmit an audio indication of the updated status of the media item. For instance, if server 102 is currently streaming a copy of the media item, server 102 can gradually decrease the volume of the streaming to indicate that the copy may soon be removed from the media pool.

In some configurations, server 102 can be located in a fixed position such that media pools in communications network 100 can be static media pools. Thus, server 102 can maintain media pools 116 and 119 regardless of which client devices are currently in the range of communications network 100. For example, server 102 can continue to maintain media pool 116 even if client devices 104, 106, and 108 have all left media pool 116 (e.g., moved out of the range of communications network 100 or exited media pool 116). If a new client device then moves into the range of communications network 100, the new client device may be able to join media pool 116.

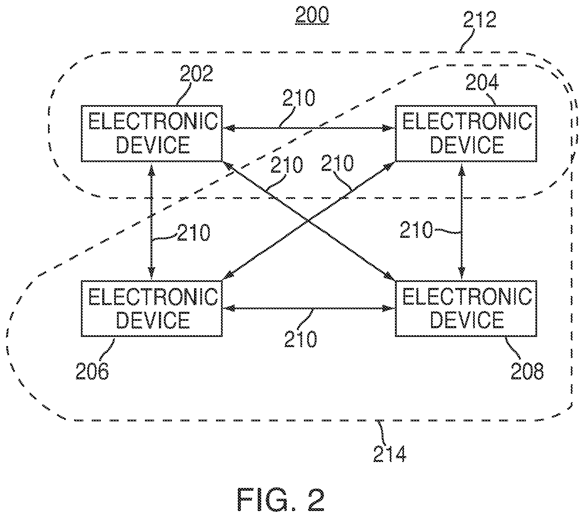

FIG. 2 is a schematic view of illustrative multi-device communications network 200 in accordance with various embodiments of the invention. Communications network 200 can include electronic devices 202, 204, 206, and 208. Although FIG. 2 only shows four electronic devices, persons skilled in the art will appreciate that this is merely illustrative and that communications network 200 can include any suitable number of electronic devices.

The electronic devices in communications network 200 (e.g., electronic devices 202, 204, 206, and 208) can include any suitable electronic devices capable of communicating with other electronic devices in communications network 200. For example, the electronic devices can include portable media players, cellular telephones, pocket-sized personal computers, personal digital assistances (PDAs), desktop computers, laptop computers, and other devices capable of communicating via wires or wirelessly (with or without the aid of a wireless enabling accessory device). The electronic devices in communications network 200 can be the same as or similar to client devices 104, 106, 108, and 110 of FIG. 1.

Electronic devices 202, 204, 206, and 208 can communicate with each other over communications link 210. Communications link 210 can include any suitable wired or wireless communications link, or combinations thereof, by which data may be exchanged between electronic devices 202, 204, 206, and 208. For example, communications link 210 can include a satellite link, a fiber-optic link, a cable link, an Internet link, or any other suitable wired or wireless link. Communications link 210 may enable data transmission using any suitable communications protocol supported by the medium of communications link 210. Such communications protocols may include, for example, Wi-Fi (e.g., a 802.11 protocol), Ethernet, Bluetooth (registered trademark), radio frequency systems (e.g., 900 MHz, 2.4 GHz, and 5.6 GHz communication systems), infrared, TCP/IP (e.g., and the protocols used in each of the TCP/IP layers), HTTP, BitTorrent, FTP, RTP, RTSP, SSH, any other communications protocol, or any combination thereof.

Electronic devices in communications network 200 can have functionalities similar to server 102 of FIG. 1. For example, an electronic device in communications network 200 (e.g., electronic device 202, electronic device 204, electronic device 206, or electronic device 208) can receive data requests from another electronic device in the same communications network. For instance, the electronic device can receive requests from another electronic device to obtain media items, such as one or more songs, videos, or pictures, and any metadata associated with the media items (e.g., a hyperlink to preview or purchase a music item, genre, artist, album, album cover art, release date, bits per minute (BPM) information, producer, song writer, keywords, tags, lyrics, vocals, bass line information, or media ranking associated with a music item). The requests may include requests to download or stream the media item, or requests to download metadata without the media item. Responsive to these requests, the electronic device can locate and provide the requested songs and/or the metadata associated with the songs.

Electronic devices in communications network 200 can obtain and process data from one or more other electronic devices in communications network 200. For example, electronic device 202 can receive metadata of a media item from electronic device 204. Electronic device 202 can then locate the media item either locally (e.g., a media library on electronic device 202) or using an online source (e.g., an online music store such as iTunes™ made available by Apple Inc.). After locating the media item, electronic device 202 can stream the media item to one or more other electronic devices in communications network 200. As another example, electronic device 202 can be configured to receive a media item directly from electronic device 204. For instance, electronic device 202 can download a copy of the media item to memory. Upon receiving the media item, electronic device 202 can stream the media item to one or more other electronic devices in communications network 100.

In some embodiments, communications network 200 can include one or more media pools accessible by one or more of the electronic devices in communications network 200. Each media pool can include media items located on one or more media sources in communications network 200. For example, communications network 200 can have a first media pool 212 that can include electronic device 202 and electronic device 204. In addition, communications network 200 can also have a second media pool 214 that can include electronic device 204, electronic device 206, and electronic device 208. It will be understood that these examples are merely illustrative and that any combination of electronic devices in communications network 200 can be used to form a media pool. It will also be understood that communications network 200 can include any suitable number of media pools. For the sake of simplicity, however, only two media pools are shown in FIG. 2.

Electronic devices in communications network 200 (e.g., electronic device 202, electronic device 204, electronic device 206, and electronic device 208) can operate in one or more modes. For example, in a streaming mode, the electronic device can select one or more media items of the media pool to stream to other electronic devices that are currently in the media pool. The same stream can thus be accessed by more than one electronic device. Similar to server 102 of FIG. 1, the electronic device can select which media item to stream based on one or more media rankings associated with the media items of the media pool. The electronic device can determine the media rankings based on one or more requests. For example, the electronic device may receive a request from a user and/or another electronic device to increase or decrease the media ranking of a media item. Thus, the media pool application can stream a media item on demand by receiving requests from one or more electronic devices of the media pool. In other embodiments, the media pool application can provide multiple streams to electronic devices in the media pool. In such a configuration, each stream can be accessed by a different set of electronic devices.

In a playback mode, the electronic device can provide a list of all the media items in a media pool to a user. In response to receiving a request from a client device to play back a media item in the list, the electronic device can provide the media item to the user. For instance, the electronic device can download the media item from another electronic device. After downloading the media item, the electronic device can play back the media item for the user. Alternatively, the electronic device can receive a stream of the media item that is being played back on another electronic device. In such a configuration, the stream can be accessed by only the electronic device.

In some embodiments, one or more electronic devices can manage lists of devices (e.g., lists of electronic device identifiers) that have permission to access the media pools in communications network 200. For example, upon receiving a request from an unknown device to access a media pool, an electronic device can determine whether the unknown device has permission to access the media pool. The electronic device can, for instance, obtain an identifier of the unknown device and attempt to locate the identifier in a list of electronic device identifiers for the media pool. The electronic device can obtain an identifier of the unknown device using any suitable approach, such as, for example, an Internet Protocol ("IP") address, a network card address such as a Media Access Control ("MAC") address, or a unique identifier that the unknown device transmits when the device first moves within the range of communications network 200. In other embodiments, the electronic device can request a username and/or password from an unknown device before allowing the unknown device to access a media pool.

Each electronic device in a media pool can monitor other electronic devices that are currently in the media pool. In addition, the electronic device can detect when another electronic device has left the media pool. The electronic device can use any suitable approach to detect when another electronic device has left. For example, the electronic device can continuously monitor whether identifiers of the other electronic devices in communications network 200 can be detected. Thus, in response to determining that an identifier of a device can no longer be detected, the electronic device can determine that the device has moved out of the range of communications network 200. As another example, the electronic device can detect that another device has moved out of the range of communications network 200 by receiving an "EXIT" request from the other device.

In response to detecting that an electronic device has left a media pool, one or more electronic devices remaining in the media pool can attempt to locate alternative sources for media items associated with the device that left. The one or more electronic devices can locate copies of the media items using any suitable media source, such as, for example, another electronic device in the media pool, another electronic device in communications network 200, a server, an online source, advertisement supported streams, and/or any combination thereof. The copies of the media items can then be used for streaming and/or play back.

In some embodiments, one or more electronic devices in a media pool can buffer a media item that is currently being streamed by another electronic device in the media pool. Thus, if electronic device 204 is currently streaming a media item in media pool 214, one or more of the other electronic devices in media pool 214 (e.g., electronic device 206 and/or electronic device 208) can simultaneously buffer the media item. If electronic device 204 then leaves media pool 214, one of the other electronic devices can continue to stream the buffered media item. The streaming of the media item can therefore appear uninterrupted to users of electronic devices 206 and 208. In some embodiments, electronic device 204 can store the buffered media item in memory.

In some embodiments, if an electronic device has left a media pool, one or more of the other electronic devices in the media pool can update the information of one or more media items associated with the electronic device that left. For example, if electronic device 204 has left media pool 214, one or more electronic devices (e.g., electronic device 206 and/or electronic device 208) can display a message indicating one or more expiration times for the media items associated with electronic device 204. For instance, if a temporary copy of a media item associated with electronic device 204 has been obtained (e.g., from an alternative source or from a buffer on the electronic device), the one or more electronic devices can indicate the amount of time remaining before the copy is removed from media pool 214. As another example, the one or more electronic devices can play an audio indication of the updated status of the media item. For instance, if a copy of the media item is currently being streamed or played back, the one or more electronic devices can gradually decrease the volume of the streaming or play back to indicate that the copy may soon be removed from media pool 214.

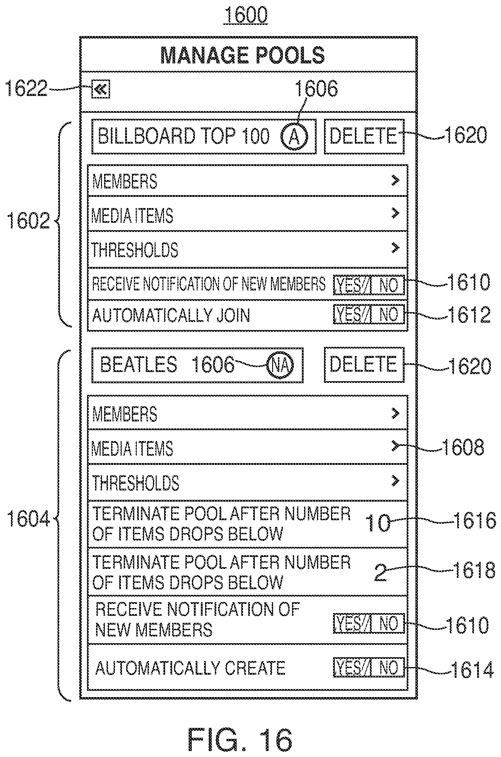

In some embodiments, media pools 212 and 214 in communications network 200 can be temporary media pools. Thus, for example, if the number of electronic devices in a media pool decreases below a pre-determined number (e.g., no electronic devices are left in a media pool or if only one electronic device is left in a media pool), the media pool may automatically terminate. In some cases, however, the configurations of previously formed media pools can be stored on one or more electronic devices such that similar media pools can be automatically created at a later time. Techniques for automatically creating media pools based on stored configurations are described in more detail in connection with FIG. 16.

Temporary media pools may be created instead of static media pools of FIG. 1 based on one or more factors. For example, temporary media pools may be created because a server can not be located in communications network 200. As another example, temporary media pools may be created because one or more of the electronic devices in communications network 200 can not communicate with a server. As yet another example, temporary media pools may be created based on one or more user instructions.

Persons skilled in the art will appreciate that temporary media pools in communications network 200 can be configured in any suitable manner. In some embodiments, each electronic device in a temporary media pool can be capable of communicating with other electronic devices in order to manage the media pool (e.g., each electronic device can be capable of creating and updating a temporary media pool). For example, each electronic device in a temporary media pool can be configured to transfer streams of media items, metadata associated with the media items, and other information associated with the temporary media pool. In other embodiments, only one electronic device can be assigned to manage the media pool. Thus, when the electronic device leaves the temporary media pool, another electronic device in the temporary media pool can be assigned to manage the media pool.

It will be understood that a communications network can include any suitable combination of static media pools and temporary media pools. Thus, a single electronic device can be a member of one or more static media pools and one or more temporary media pools. In addition, a communications network can also include hybrid media pools. For example, in a hybrid media pool, a first electronic device and a second electronic device can communicate directly over a first communications link (e.g., communications link 210 of FIG. 2) in the communications network. Moreover, a server in the communications network can communicate directly with the first electronic device over a second communications link (e.g., communications link 112 of FIG. 1). The server may thus communicate indirectly with the second electronic device through the first electronic device.

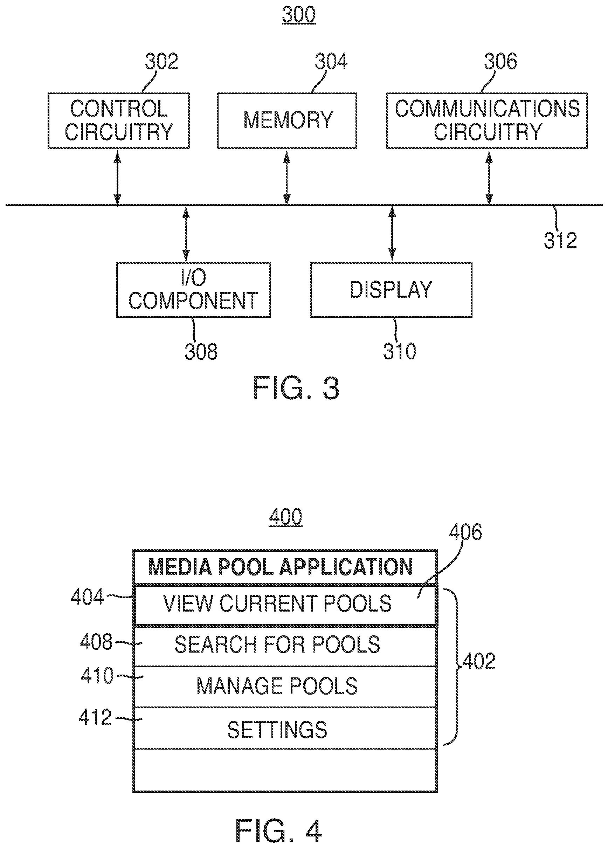

Referring now to FIG. 3, a schematic view of illustrative electronic device 300 is shown. Electronic device 300 can be a device that is the same or similar to client devices 104, 106, 108, and 110 of FIG. 1 or electronic devices 202, 204, 206 and 208 of FIG. 2. In some embodiments, electronic device 300 can be a device not operative to communicate with a server. Electronic device 300 can include control circuitry 302, memory 304, communications circuitry 306, input/output ("I/O") component 308, display 310, and bus 312. Electronic device 300 can include other components not shown in FIG. 3, such as a power supply for providing power to the components of electronic device. Also, while only one of each component is illustrated, electronic device 300 can include more than one of some or all of the components.

Control circuitry 302 can control the operation and various functions of device 300. For example, as described in greater detail below, control circuitry 302 can identify and connect to one or more media pools in a communications network. As another example, control circuitry 302 can control the play back of one or more media items. Control circuitry 302 can include any components, circuitry, or logic operative to drive the functionality of electronic device 300. For example, control circuitry 302 can include one or more processors acting under the control of an application (e.g., a media pool application) and operating system.

In some embodiments, the application can be stored in memory 304. Memory 304 can include any suitable combination of non-volatile and volatile memories, such as cache memory, Flash memory, random access memory (RAM) (e.g., DDR RAM and/or SRAM), read only memory (ROM), a hard drive, an EPROM, EEPROM, or any combination thereof. In some embodiments, memory 304 can include a memory module specifically dedicated to storing firmware for control circuitry 302, such as for device applications (e.g., operating system, user interface functions, and other processor functions).

In some embodiments, memory 304 may include memory modules operative to provide mass storage for electronic device 300. Memory 304 can be used by control circuitry 302 to store media items (e.g., audio items, video items, and/or image items) and other types of electronic data (e.g., text-based files, pictures, and graphics). Memory 304 can store metadata associated with locally stored and remotely stored media items, such as media pool playlists, media item grouping information, genre, artist, album, album cover art, date, BPM, lyrics, vocals information, bass line information, or any other suitable metadata for each media item. In some embodiments, the media items and associated metadata can be obtained from a server (e.g., server 102 of FIG. 1) or one or more electronic devices (e.g., client devices 104, 106, 108, and 110 of FIG. 1 and/or electronic devices 202, 204, 206 and 208 of FIG. 2). Memory 304 can also store any other suitable information, such as preference information (e.g., music playback preferences), lifestyle information, exercise information (e.g., obtained from exercise monitoring system), transaction information (e.g., credit card information), subscription information (e.g., for podcasts or television shows), and telephone information (e.g., an address book).

Communications circuitry 306 can enable electronic device 300 to communicate with other devices such as with a server (e.g., server 102 of FIG. 1) and/or another electronic device (e.g., client devices 104, 106, 108, and 110 of FIG. 1 and/or electronic devices 202, 204, 206 and 208 of FIG. 2). For example, communications circuitry 306 can include Wi-Fi enabling circuitry that permits wireless communications according to one of the 802.11 standards or a private network. Other wired or wireless protocol standards, such as Bluetooth, can be used in addition or instead.

I/O component 308 and display 310 can provide a user interface for a user to interact with electronic device 300. I/O component 308 may enable a user to provide inputs and feedback to electronic device 300. I/O component may also provide an interface by which electronic device 300 can provide music and other audio elements to a user. I/O component 308 can take any of a variety of forms, such as one or more of a button, keypad (e.g., computer keyboard), dial, click wheel, touch screen, accelerometer, any type of speakers (e.g., computer speakers or headphones), haptic outputs (e.g., vibrational outputs), any other suitable I/O component, and/or any combination thereof. Display 310 can present visual media (e.g., graphics such as album cover, text, and video) to the user. Display 310 can include, for example, a liquid crystal display (LCD), a touch screen display, or any other type of display.

Bus 312 may provide a data transfer path for transferring data to, from, or between control circuitry 302, memory 304, communications circuitry 306, I/O component 308, display 310, and some or all of the other components of electronic device 300.

In some embodiments, electronic device 300 can provide a media pool application to a user. For example, the media pool application can display media pools that are currently connected to electronic device 300. In addition, the media pool application can search for candidate media pools in a communications network. Furthermore, the media pool application can manage one or more media pools.

Referring now to FIGS. 4-17, illustrative display screens of a media pool application are shown in accordance with various embodiments of the invention. The media pool application may be executed by control circuitry (e.g., control circuitry 302 of FIG. 3) of an electronic device (e.g., client devices 104, 106, 108, and 110 of FIG. 1, electronic devices 202, 204, 206 and 208 of FIG. 2, and electronic device 300 of FIG. 2).

FIG. 4 shows a display screen 400 of an illustrative top level menu of the media pool application, which can be provided by various embodiments of the electronic device. Display screen 400 can include a list of options 402 and highlight region 404. In some embodiments, by moving highlight region 404 using an input component (e.g., I/O component 308 of FIG. 3), the user may select an option in list of options 402. For example, the user may move highlight region 404 by rotating a click wheel. In other embodiments, the user may select an option in list of options 402 by selecting the option on a touch screen of the electronic device.

From display screen 400, the user may select "VIEW CURRENT POOLS" option 406 using any suitable manner (e.g., by clicking a click wheel while "VIEW CURRENT POOLS" option 406 is highlighted by highlight region 404 or by selecting "VIEW CURRENT POOLS" option 406 on a touch screen of the electronic device). The media pool application can then present a display screen associated with "VIEW CURRENT POOLS" option 406.

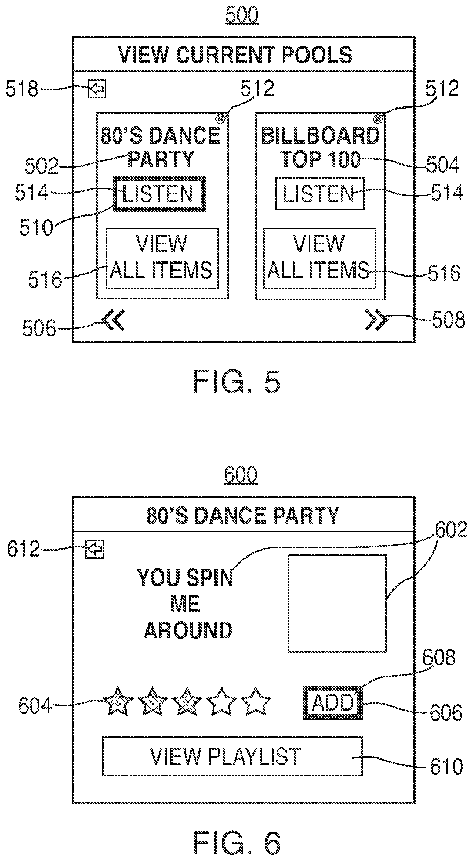

For example, FIG. 5 shows a display screen 500 for providing current media pools. Display screen 500 can include media pool icons 502 and 504. Media pool icons 502 and 504 can represent media pools that the electronic device is currently connected to.

Persons skilled in the art will appreciate that any suitable number of media pool icons can be shown on display screen 500. For the sake of simplicity, however, only media pool icons 502 and 504 are shown in display screen 500. In some embodiments, a user can select to view additional media pools by selecting "BACKWARD" option 506 and/or "FORWARD" option 508. For example, in response to receiving a user selection of "BACKWARD" option 506 (e.g., in response to a user clicking a click wheel on "BACKWARD" option 506 while option 506 is highlighted by highlight region 510 or in response to a user sliding a finger to the right on a touch screen of the electronic device), the media pool application can scroll media pool icons 502 and 504 to the right and display additional media pool icons. As another example, in response to receiving a user selection of "FORWARD" option 508 (e.g., in response to a user clicking a click wheel on "FORWARD" option 508 while option 508 is highlighted by highlight region 510 or in response to a user sliding a finger to the left on a touch screen of the electronic device), the media pool application can scroll media pool icons 502 and 504 to the left and display additional media pool icons.

Display screen 500 can include one or more "EXIT" options 512. In response to the user selecting an "EXIT" option 512 of a particular media pool icon, the media pool application can disconnect the electronic device from the media pool represented by the media pool icon. In some configurations, the media pool application can also transmit an "EXIT" request to other media sources (e.g., one or more servers and/or electronic devices) in the media pool to indicate that the electronic device is leaving the media pool.

For example, in response to the user selecting "EXIT" option 512 of media pool icon 502, the media pool application can disconnect the device from the "80's Dance Party" media pool. As a result, media items of the "80's Dance Party" media pool associated with the electronic device can be removed from the media pool. In addition, the media pool application can remove media pool icon 502 from display screen 500.

In some embodiments, the media pools represented by media pool icons 502 and 504 can be a subset of media pools in a communications network where the electronic device is currently located. For example, "80's Dance Party" represented by media pool icon 502 can be a static media pool with a configuration similar to media pools 116 and 118 of FIG. 1. Thus, the media pool can include media items from one or more electronic devices (e.g., client devices 104, 106, 108 and 110 of FIG. 1) and one or more servers (e.g., server 102 of FIG. 1) currently in the communications network (e.g., communications network 100 of FIG. 1). As another example, "Billboard Top 100" represented by media pool icon 504 can be a temporary media pool with a configuration similar to media pools 212 and 214 of FIG. 2. Thus, the media pool can include media items from one or more electronic devices (e.g., electronic devices 202, 204, 206, and 208 of FIG. 2) currently located in the communications network (e.g., communications network 200 of FIG. 2).

Each media pool icon (e.g., media pool icons 502 and 504) can include a "LISTEN" option 514. In response to the user selecting a "LISTEN" option 514 for a media pool (e.g., in response to the user clicking a click wheel while "LISTEN" option 514 is highlighted by highlight region 510 or in response to the user selecting "LISTEN" option 514 on a touch screen), the media pool application can receive a stream of one or more media items from the media pool. The media pool application can then provide the stream to the user.

For example, FIG. 6 shows a display screen 600 associated with providing a stream of a media item (e.g., a song) can be provided to a user. The media pool application can receive the stream from any suitable media source in the media pool (e.g., the electronic device, another electronic device in the media pool, or a server in the media pool).

Display screen 600 can include media item information 602 that can be associated with the media item that is currently being streamed in the media pool. Persons skilled in the art will appreciate that although only the media item title and album cover art are shown in display screen 600, media item information 602 can include any other suitable metadata associated with the media item, such as, for example, genre, artist, album, album cover art, media source, release date, BPM information, producer, song writer, keywords, tags, or media ranking associated with the media item, and/or any combination thereof.

In some embodiments, display screen 600 can include "STAR RATING" option 604 which can allow a user to adjust the media ranking of the media item. Thus, in response to the user adjusting "STAR RATING" option 604 (e.g., by rotating a click wheel while "STAR RATING" option 604 is highlighted by highlight region 606 or sliding a finger over "STAR RATING" option 604 on a touch screen of the electronic device), the media pool application can perform one or more actions. For example, if the media pool is a static media pool, the media pool application can transmit a request to a server to adjust the ranking of the media item based on the user adjustment of "STAR RATING" option 604. For instance, the media pool application can transmit a message with a header that uniquely identifies the media item and the electronic device and a body that includes a request to adjust the media ranking of the media item. As another example, if the media pool is a temporary media pool, the media pool application can adjust the media ranking of the media item based on the user adjustment of "STAR RATING" option 604.

In some embodiments, the media pool application can perform one or more actions in response to determining that the media ranking has reached a pre-determined threshold. For example, in response to determining that the media ranking of a media item has decreased below a removal threshold, the media pool application can remove the media item from the media pool. The media pool application can remove the media item at any suitable time. For example, the media pool application can remove the media item from the media pool as soon as the media ranking associated with the media item decreases below the removal threshold. As another example, if the media pool application is currently streaming the media item, the media pool application can wait until the media item has finished streaming before removing the media item from the media pool.

As another example, in response to determining that the media ranking of a media item has increased above an increase position threshold, the media pool application can move the media item to a higher position in a media pool playlist. A media pool playlist can be a playlist specifying an order for streaming media items of the media pool to the user. Similarly, in response to determining that the media ranking of a media item has decreased below a decrease position threshold, the media pool application can move the media item to a lower position in the media pool playlist. Persons skilled in the art will appreciate that although FIGS. 6-17 refer to a media pool application that performs one or more actions in response to user instructions, the media pool application can instead of or in addition transmit relevant information (e.g., user instructions, metadata associated with media items, and other suitable information associated with a media pool) to one or more other electronic devices in a temporary media pool. Thus, the other electronic devices in the temporary media pool can perform the same or similar actions as the actions performed by the electronic device.

In some embodiments, if the media item is currently streamed from another electronic device in the media pool, display screen 600 can include "ADD" option 608 that can allow a user to add the media item to one or more media sources. For example, in response to the user selecting "ADD" option 608 (e.g., in response to the user clicking a click wheel while "ADD" option 608 is highlighted by highlight region 606 or in response to the user selecting "ADD" option 608 on a touch screen), the media pool application can present a display screen associated with "ADD" option 608.

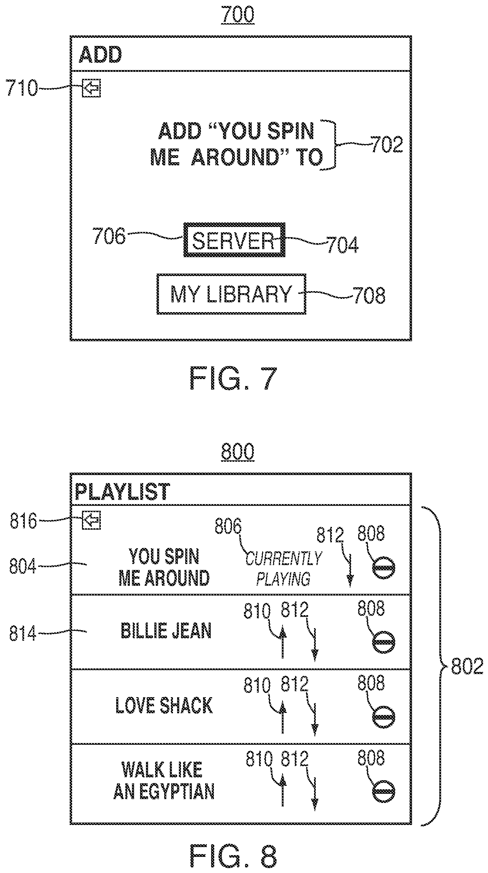

For example, FIG. 7 shows a display screen 700 associated with an "ADD" option. Display screen 700 can display information associated with a media item in information region 702. In some embodiments, display screen 700 can include one or more options for adding the media item to one or more media sources in the media pool. For example, "SERVER" option 702 can be displayed if a media library on a server does not include the media item. In response to the user selecting "SERVER" option 704 (e.g., in response to the user clicking a click wheel while "SERVER" option 704 is highlighted by highlight region 706 or in response to the user selecting "SERVER" option 704 on a touch screen), the media pool application can transmit the request to add the media item to the server. In some embodiments, the media pool application can remove "SERVER" option 704 from display screen 700 after the user has selected option 704. Thus, the user may still have the option of selecting "MY LIBRARY" option 708 if option 708 has not yet been selected.

In response to receiving the request from the electronic device, the server can determine whether the media item is stored in memory of the server (e.g., memory 114 of FIG. 1). If the server determines that the media item is not stored in memory, the server can perform one or more actions depending on one or more settings of the media pool. For example, the server can automatically download the media item to memory if the electronic device has permission to add media items to the server. For instance, the server can download the media item from another media source (e.g., one or more electronic devices or an online source). As another example, the server can maintain a counter that monitors the number of add requests that have been received. In response to receiving a request to add a media item, the server can increment the counter by one. Thus, the server can download the media item only if the server determines that the counter has increased above a pre-determined threshold (e.g., an add threshold).

As another example, "MY LIBRARY" option 708 can be displayed in display screen 700 if the media pool application determines that the media item is not stored in memory of the electronic device (e.g., memory 304 of FIG. 3). In some embodiments, in response to the user selecting "MY LIBRARY" option 708 (e.g., in response the user clicking a click wheel while "MY LIBRARY" option 708 is highlighted by highlight region 706 or in response to the user selecting "MY LIBRARY" option 708 on a touch screen), the media pool application can download the media item from another media source (e.g., another electronic device, a server, and/or an online source). The media pool application can then store the downloaded media item in memory. In other embodiments, in response to the user selecting "MY LIBRARY" option 708, the media pool application can flag or tag the media item for future purchase.

In some embodiments, the media pool application can remove "MY LIBRARY" option 708 from display screen 700 after the user has selected option 708. Thus, the user may still have the option of selecting "SERVER" option 704 if option 704 has not yet been selected.

From display screen 700, the user may choose to return to viewing media item information associated with the currently playing media item by selecting "BACK" option 710. In response to the user selecting "BACK" option 710, the media pool application can, for example, return to a display screen similar to display screen 600 (FIG. 6).

Thus, referring back to FIG. 6, display screen 600 can include "VIEW PLAYLIST" option 610 that can allow the user to view upcoming media items of the media pool playlist. In response to the user selecting "VIEW PLAYLIST" option 610 (e.g., in response to the user clicking a click wheel while "VIEW PLAYLIST" option 610 is highlighted by highlight region 606 or in response to the user selecting "VIEW PLAYLIST" option 610 on a touch screen), the media pool application can present a display screen associated with "VIEW PLAYLIST" option 610.

For example, FIG. 8 shows a display screen 800 associated with "VIEW PLAYLIST" option 610. Display screen 800 can include media pool playlist 802 that can provide a user with a list specifying an order for streaming media items of the media pool to the user. For example, playlist item 804 in media pool playlist 802 can include a marker 806 indicating that playlist item 804 is the currently playing media item.

In some embodiments, each playlist item in media pool playlist 802 can include "REMOVE" option 808. If the media pool is a temporary media pool, in response to receiving a user selection of "REMOVE" option 808 of a media item, the media pool application can attempt to remove the media item from the media pool. For example, if the media item is the currently playing media item, the media pool application can wait for the media item to finish playing before removing the media item from the media pool. In other embodiments, the media pool application can lower a media ranking of the media item in response to receiving a user selection of "REMOVE" option 808 of the media item. The media pool application can then remove the media item once the media ranking of the media item decreases below a pre-determined threshold (e.g., a removal threshold).

If the media pool is instead a static media pool, in response to receiving a user selection of "REMOVE" option 808 of a media item, the media pool application can transmit a removal request to a server in the static media pool. For instance, the media pool application can transmit a message with a header that uniquely identifies the media item and the electronic device and a body that includes a request to remove the media item. The server can perform one or more actions in response to receiving the request. In some embodiments, in response to receiving the request, the server can remove the media item from media pool. In other embodiments, the server can decrease the media ranking of the media item. If, by decreasing the media ranking, the server then determines that the media ranking of the media item has decreased below a pre-determined threshold (e.g., a removal threshold), the server can remove the media item from the media pool.

In some embodiments, one or more playlist items in playlist 802 can include "MOVE UP" option 810 and "MOVE DOWN" option 812. If the media pool is a temporary media pool, in response to receiving a user selection of "MOVE UP" option 810 or "MOVE DOWN" option 812 of a media item, the media pool application can perform one or more actions. For example, the media pool application can move the media item to a higher position in media pool playlist 802 in response to receiving a user selection of "MOVE UP" option 810. Similarly, the media pool application can move the media item to a lower position in media pool playlist 802 in response to receiving a user selection of "MOVE DOWN" option 812. As another example, if the media item is the currently playing media item, the media pool application can wait for the media item to finish playing before moving the media item to a different position in media pool playlist 802.

In other embodiments, the media pool application can adjust a media ranking of the media item in response to receiving a user selection of "MOVE UP" option 810 or "MOVE DOWN" option 812. Thus, if the application determines that the media ranking of the media item has reached a pre-determined threshold (e.g., an increase position threshold or a decrease position threshold), the media pool application can move the media item to a different position in playlist 802.

If the media pool is instead a static media pool, in response to receiving a user selection of "MOVE UP" option 810 or "MOVE DOWN" option 812 of a media item, the media pool application can transmit a request to adjust the position of the media item to a server in the static media pool. For instance, the media pool application can transmit a message with a header that uniquely identifies the media item and the electronic device and a body that includes a request to adjust the position of the media item. In some embodiments, in response to receiving the request, the server can move the media item to a different position in the media pool playlist.

In some configurations, if the server receives conflicting requests for position adjustments from multiple electronic devices, the server can resolve the conflicts based on priorities of the multiple electronic devices. For example, an electronic device of the media pool can be assigned a priority based on the number of media items of the media pool that are located on the device. As another example, the priority of an electronic device can be increased if a media item of the electronic device is currently being streamed and/or played back in the media pool. As yet another example, the priority of the electronic device can be increased if a media item of the electronic device is the next item to be streamed in the media pool. As a further example, the server can assign priorities based on an absolute priority ranking of the electronic devices. For instance, the priority ranking may depend on when each device connected to the media pool.

Based on priorities assigned to the electronic devices, the server can resolve the conflicting requests using any suitable approach. For example, the server can assign different weights to requests received from different devices depending on the priority assigned to each device. For instance, a request received from a device with a higher priority can receive a higher weight than a request received from a device with a lower priority. As another example, the server can determine the preferences of the electronic device with the highest priority and resolve conflicts based on the preferences of that device.

In other embodiments, in response to receiving the request, the server can adjust the media ranking of the media item. If, by adjusting the media ranking, the server determines that the media ranking of the media item has reached a pre-determined threshold (e.g. an increase position threshold or a decrease position threshold), the server can move the media item to a different position in the media pool playlist.

From display screen 800, the user may choose to view additional information associated with a media item by selecting a particular playlist item in playlist 802. For example, in response to the user selecting playlist item 814, the media pool application can present a display screen associated with playlist item 814.

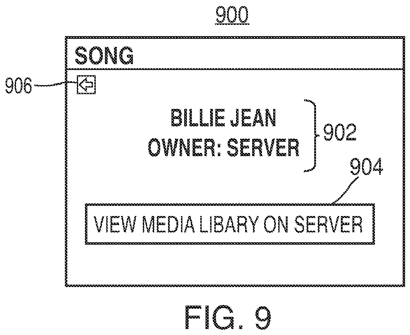

For example, FIG. 9 shows a display screen 900 associated with a playlist item. Display screen 900 can include media item information 902 associated with the playlist item. Media item information 902 can include, for instance, the title and media source of the playlist item. As shown in display screen 900, for example, the media source for the playlist item is a server in the media pool. Persons skilled in the art will appreciate that although only the title and media source of the playlist item are displayed, media item information 902 can include any other suitable metadata associated with the media item, such as, for example, genre, artist, album, album cover art, release date, BPM information, producer, song writer, keywords, tags, or media ranking associated with the media item, and/or any combination thereof.

In some embodiments, display screen 900 can include a "VIEW MEDIA LIBRARY" option 904 that can allow a user to view the media items stored on the media source. In some configurations, the media items can include only those items stored on the media source that the user has permission to view.

From display screen 900, the user may select to return to viewing one or more current media pools (e.g., by selecting "BACK" option 906 of FIG. 9, "BACK" option 816 of FIG. 8, and "BACK" option 612 of FIG. 6). In response to receiving the user selection, the media pool application can, for example, return to a display screen similar to display screen 500 (FIG. 5).

Thus, referring back to FIG. 5, display screen 500 can include "VIEW ALL ITEMS" option 516, which can allow a user to view the media items of a media pool. In response to the user selecting "VIEW ALL ITEMS" option 516 (e.g., in response to the user clicking a click wheel while "VIEW ALL ITEMS" option 516 is highlighted by highlight region 510 or in response to the user selecting "VIEW ALL ITEMS" option 516 on a touch screen), the media pool application can present a display screen associated with "VIEW ALL ITEMS" option 516.

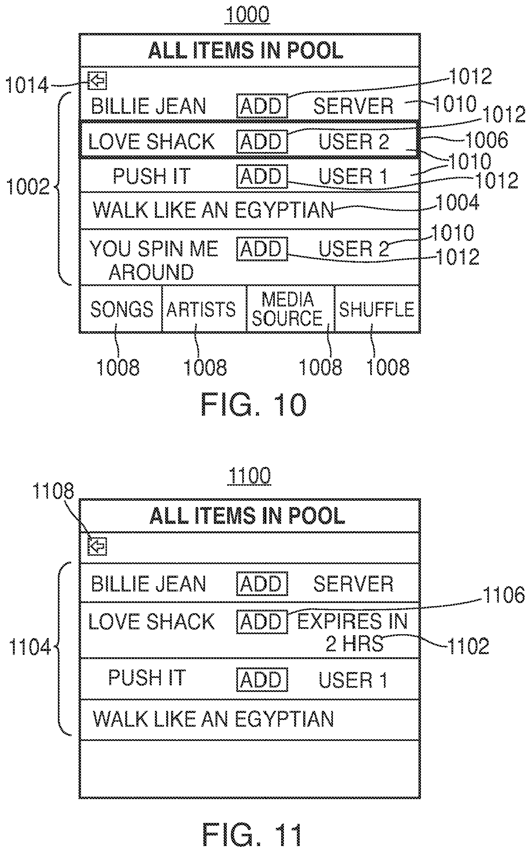

For example, FIG. 10 shows a display screen 1000 associated with a "VIEW ALL ITEMS" option. Display screen 1000 can include list of media item options 1002. For example, the user may select to play back a media item by selecting a media item option associated with the media item in list of media item options 1002. For instance, the user may select media item option 1004 by clicking a click wheel while media item option 1004 is highlighted by highlight region 1006 or by selecting the media item on a touch screen of the electronic device. In response to receiving the user selection, the media pool application can play back the media item associated with media item option 1004.

Display screen 1000 can include options 1008. A subset of options 1008 can allow a user to re-arrange media item options in list of media item options 1002 (e.g., re-arrange the media item options based on songs, artists, and/or media source). In addition, another subset of options 1008 can allow a user to change the play back order of media items (e.g., shuffle the media items for play back).

In some embodiments, list of media item options 1002 can include media source information 1010, which can identify media sources of media items that are not locally stored on the electronic device. In addition, list of media item option 1002 can include "ADD" options 1012 that can allow a user to add one or more media items of the media pool to the electronic device and/or the server. For example, in response to the user selecting an "ADD" option 1012, the media pool application can provide a display screen similar to display screen 700 of FIG. 7.

As discussed previously in connection with FIG. 2, the media pool application can detect when one or more other electronic devices have left the media pool. In some embodiments, if the media pool application detects that the electronic device of "USER 2" has left the media pool, the media pool application can update the information of one or more media items associated with the electronic device of "USER 2".

For example, FIG. 11 shows a display screen 1100 associated with a "VIEW ALL ITEMS" option after an electronic device of "USER 2" has left the media pool. Display screen 1100 can include one or more time indicators 1102 for one or more media items associated with the electronic device of "USER 2". For example, the media pool application may have obtained a temporary copy of a media item associated with the electronic device of "USER 2" (e.g., from an alternative media source or from a buffer on the electronic device). Thus, a time indicator 1102 can indicate the amount of time remaining before the copy is removed from the media pool. In some embodiments, if the media pool application was unable to locate a copy of a media item, the media pool application may remove the media item from the list of media items (e.g., list of media item options 1104).

In some embodiments, the user may select to add temporary copies of one or more media items to the media pool by selecting an "ADD" option 1106. In response to the user selecting "ADD" option 1106, the media pool application can attempt to store the temporary copies of the media items on the electronic device and/or the server.

From display screen 1000 of FIG. 10 or display screen 1100 of FIG. 11, the user may select to return to viewing a top level menu of the media pool application (e.g., by selecting "BACK" option 1108 of FIG. 11 or "BACK" option 1014 of FIG. 10, and "BACK" option 518 of FIG. 5). In response to receiving the user selection, the media pool application can, for example, return to a display screen similar to display screen 400 (FIG. 4).

Thus, referring back to FIG. 4, display screen 400 can include "SEARCH FOR POOLS" option 408 that can provide the user with candidate media pools in a communications network where the electronic device is located. The user may select "SEARCH FOR POOLS" option 408 using any suitable manner (e.g., by clicking a click wheel while "SEARCH FOR POOLS" option 408 is highlighted by highlight region 404 or by selecting "SEARCH FOR POOLS" option 408 on a touch screen of the electronic device). In response to receiving a selection of "SEARCH FOR POOLS" option 408, the media pool application can detect one or more candidate media pools in a communications network where the electronic device is located. The media pool application can then present a display screen associated with "SEARCH FOR POOLS" option 408.

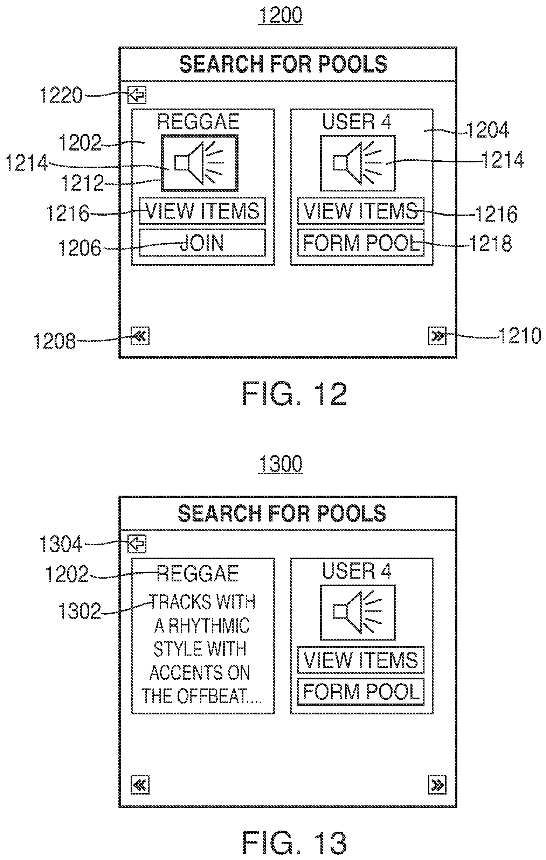

For example, FIG. 12 shows a display screen 1200 for providing candidate media pools. Display screen 1200 can include media pool icons 1202 and 1204, which can represent candidate media pools that the electronic device can connect to (e.g., an existing media pool or another electronic device). For example, media pool icon 1202 can represent an existing media pool that a user may select to join (e.g., by selecting "JOIN" option 1206). Thus, in response to the user selecting "JOIN" option 1206, the media pool application can connect to the existing media pool represented by media pool icon 1202. In some embodiments, the media pool application can automatically attempt to add one or more media items of the electronic device (e.g., one or more media items selected by a user to be shared with other media sources) to the existing media pool. The media pool application can determine which media items to add based on metadata associated with the media items and/or grouping information obtained from previously formed playlists. The media pool application can locate the metadata and playlists on one or more electronic devices, a server, an online source, any other suitable source, and/or any combination thereof.

Persons skilled in the art will appreciate that any suitable number of media pool icons can be shown on display screen 1200. For the sake of simplicity, however, only media pool icons 1202 and 1204 are shown in display screen 1200. In some embodiments, a user can select to view candidate media pools by selecting "BACKWARD" option 1208 and/or "FORWARD" option 1210. For example, in response to receiving a user selection of "BACKWARD" option 1208 (e.g., in response to a user clicking a click wheel on "BACKWARD" option 1208 while option 1202 is highlighted by highlight region 1212 or in response to a user sliding a finger to the right on a touch screen of the electronic device), the media pool application can scroll media pool icons 1202 and 1204 to the right and display additional media pool icons representing additional candidate media pools. As another example, in response to receiving a user selection of "FORWARD" option 1210 (e.g., in response to a user clicking a click wheel on "FORWARD" option 1210 while option 1204 is highlighted by highlight region 1212 or in response to a user sliding a finger to the left on a touch screen of the electronic device), the media pool application can scroll media pool icons 1202 and 1204 to the left and display additional media pool icons.

Each media pool icon can include a "PREVIEW" option 1214 which can allow the user to hear a sample of a portion of one or more media items of a candidate media pool. For example, the user may select a "PREVIEW" option 1214 by clicking a click wheel on "PREVIEW" option 1214 while option 1214 is highlighted by highlight region 1212 or by selecting "PREVIEW" option 1214 on a touch screen of the electronic device.

In some embodiments, if a user selects "PREVIEW" option 1214 of an existing media pool (e.g., a candidate media pool represented by media pool icon 1202), the user may hear a portion of one or more media items that are currently being streamed in the candidate media pool. The preview of the stream can end after a period of time (e.g., 30 seconds) has elapsed. In other embodiments, if a user selects "PREVIEW" option 1214 of another electronic device (e.g., an electronic device represented by media pool icon 1204), the user may hear a portion of one or more media items that are in the media library of the other electronic device. For instance, the user may hear a portion of the favorite song of a user of the other electronic device.

In addition, each media pool icon can include a "VIEW ITEMS" option 1216 which can allow the user to view one or more media items of the candidate media pool represented by each media pool icon. For example, the user may select a "VIEW ITEMS" option 1216 by clicking a click wheel on "VIEW ITEMS" option 1216 while option 1216 is highlighted by highlight region 1212 or by selecting "VIEW ITEMS" option 1216 on a touch screen of the electronic device. In response to the user selecting "VIEW ITEMS" option 1216, the media pool application can provide a list of one or more media items of the candidate media pool. In some embodiments, the user may select each media item in the list to hear a preview of the media item. In other embodiments, the user may only have limited access to the media items in the list (e.g., the user may only have the ability to view information associated with the media items and may be prevented from hearing a preview of the media items).

In some embodiments, the user may select a media pool icon to view a description of the candidate media pool. The user may select the media pool icon by, for example, by clicking a click wheel on a media pool icon while the icon is highlighted by highlight region 1212 or by tapping the media pool icon on a touch screen of the electronic device. For instance, in response to the user selecting media pool icon 1202, the media pool application can provide a description of the candidate media pool represented by media pool icon 1202.

For example, FIG. 13 shows a display screen 1300 for providing a description of a candidate media pool. Displays screen 1300 can include description region 1302 that can provide a description of a candidate media pool represented by media pool icon 1202. In some embodiments, the user may return to viewing other options associated with the candidate media pool (e.g., "PREVIEW" option 1214 of FIG. 12, "VIEW ITEMS" option 1216 of FIG. 12, "JOIN" option of FIG. 12, and/or "FORM POOL" option 1218 of FIG. 12) by re-selecting the media pool icon (e.g., by clicking a click wheel on a media pool icon while the icon is highlighted or by tapping the media pool icon on a touch screen of the electronic device). In response to the user re-selecting media pool icon 1202, the media pool application can return to displaying display screen 1200 of FIG. 12.

Referring back to FIG. 12, the media pool application can provide a media pool icon (e.g., media pool icon 1204) that represents an electronic device instead of an existing media pool. In some embodiments, if a media pool icon represents an electronic device, the media pool application can provide an option to form a media pool with the electronic device. For example, display screen 1200 can include "FORM POOL" option 1218 that can allow a user to form one or more media pools with an electronic device represented by the media pool icon (e.g., media pool icon 1204). In response to the user selecting "FORM POOL" option 1218 (e.g., in response to the user clicking a click wheel on "FORM POOL" option 1218 while option 1218 is highlighted by highlight region 1212 or in response to the user selecting "FORM POOL" option 1218 on a touch screen of the electronic device), the media pool application can provide additional candidate media pools to the user.

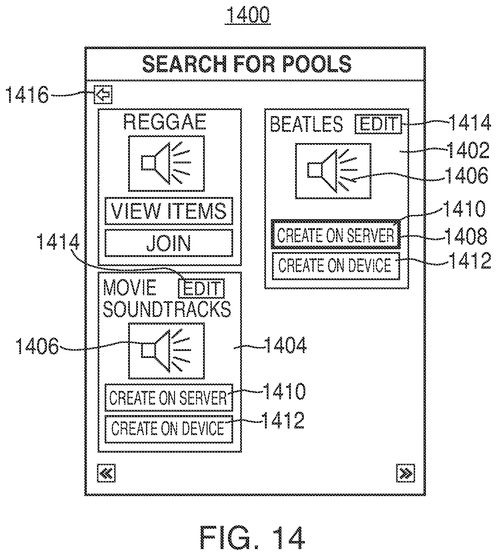

For example, FIG. 14 shows a display screen 1400 for providing additional candidate media pools. Display screen 1400 can include media pool icons 1402 and 1404 representing additional candidate media pools that have been generated by the media pool application. The media pool application can generate the additional candidate media pools based on any suitable information including, for example, metadata associated with media items stored on the electronic device and metadata associated with media items stored on a new electronic device (e.g., an electronic device represented by media pool icon 1204 of FIG. 12). For instance, for a first media item stored on either the electronic device or the new electronic device, the media pool application can identify other media items that have the same or a similar/related metadata (e.g., a second media item stored on either the electronic device or the new electronic device). The media pool application can, for example, match a portion of the metadata of the first media item with a portion of the metadata of the second media item. Alternatively, the media pool application can use the particular media item to eliminate any media items stored on either the electronic device or the new electronic device that do not have compatible metadata.

In some embodiments, the media pool application can determine which media items are commonly grouped or played with one another based on information obtained from previously formed playlists. The media pool application can locate the playlists on the electronic device, the new electronic device, a server, an online source, any other suitable source, and/or any combination thereof.

Each media pool icon can include a "PREVIEW" option 1406 which can allow the user to hear a portion of one or more media items of a candidate media pool. For example, the user may select a "PREVIEW" option 1406 by clicking a click wheel on "PREVIEW" option 1406 while option 1406 is highlighted by highlight region 1408 or by selecting "PREVIEW" option 1406 on a touch screen of the electronic device. In response to the user selecting "PREVIEW" option 1406, the user may hear a portion of one or more media items of the additional candidate media pool.

In addition, each media pool icon can include "CREATE ON SERVER" option 1410 and "CREATE ON DEVICE" option 1412. In some embodiments, the media pool application can display "CREATE ON SERVER" option 1410 if one or more servers are available in a communications network where the electronic device is located. In response to the user selecting "CREATE ON SERVER" option 1410 for a candidate media pool (e.g., in response to the user clicking a click wheel on "CREATE ON SERVER" option 1410 while option 1410 is highlighted by highlight region 1408 or in response to the user selecting "CREATE ON SERVER" option 1410 on a touch screen of the electronic device), the media pool application can create the media pool (e.g., a static media pool) on one or more servers.

In some embodiments, the media pool created on the one or more servers may be accessible to the new electronic device. For example, the electronic device can transmit information to the new electronic device indicating that a media pool has been created on the one or more servers. In some embodiments, the new electronic device can automatically connect to the newly created media pool. In other embodiments, the new electronic device can provide the newly created media pool as a candidate media pool that a user of the new electronic device may select to join.

In response to the user selecting "CREATE ON DEVICE" option 1412 (e.g., in response to the user clicking a click wheel on "CREATE ON DEVICE" option 1412 while option 1412 is highlighted by highlight region 1408 or in response to the user selecting "CREATE ON DEVICE" option 1412 on a touch screen of the electronic device), the media pool application can create the media pool (e.g., a temporary media pool) on the electronic device. In addition to creating the media pool on the electronic device, the media pool application can also transmit information associated with the media pool to the new electronic device. As a result, the same media pool may be created on the new electronic device. In some embodiments, the new electronic device can automatically connect to the newly created media pool. In other embodiments, the new electronic device can provide the newly created media pool as a candidate media pool that a user of the new electronic device may select to join.

Display screen 1400 can include "EDIT" options 1414 for each media pool icon. "EDIT" options 1414 may allow a user to edit a candidate media pool associated with each icon. For example, in response to the user selecting an "EDIT" option 1414 of a media pool icon (e.g., in response to the user clicking a click wheel on "EDIT" option 1414 while option 1414 is highlighted by highlight region 1408 or in response to the user selecting "EDIT" option 1414 on a touch screen of the electronic device), the media pool application can provide one or more options for editing a candidate media pool represented by the media pool icon (e.g., media pool icon 1402).

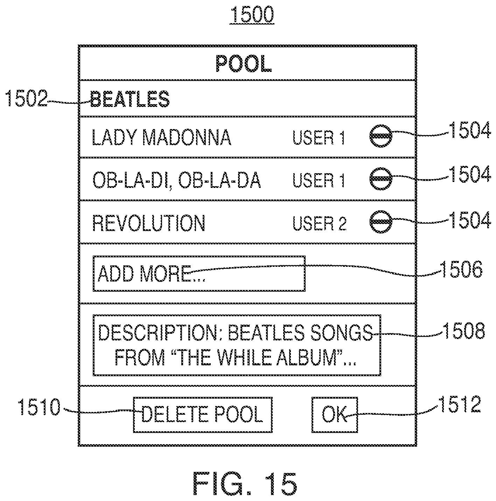

For example, FIG. 15 shows a display screen 1500 for editing a candidate media pool. Display screen 1500 can include one or more options for editing the candidate media pool. For example, display screen 1500 can include "TITLE" option 1502 for allowing a user to change the title of the candidate media pool. As another example, one or more "REMOVE" options 1504 can be displayed in display screen 1500 for the media items in the candidate media pool. Thus, by selecting a "REMOVE" option 1504 of a media item, the user may remove the media item from the candidate media pool. As yet another example, display screen 1500 can include "ADD MORE" option 1506 that can allow the user to add additional media items of a media library to the candidate media pool.

As a further example, the media pool application can provide a "DESCRIPTION" option 1508 that can include a description of the candidate media pool. The media pool application can generate the description of the media pool based on any suitable information, such as, for example, metadata of the media items, information associated with the metadata of the media items obtained from a server, an online source, and/or any combination thereof. In some embodiments, the user may select "DESCRIPTION" option 1508 to edit the description of the candidate media pool.

Display screen 1500 can include "DELETE POOL" option 1510 for allowing the user to delete the candidate media pool. In addition, display screen 1500 can include "OK" option 1512 for allowing the user to save one or more changes that the user has made to the candidate media pool. In response to the user selecting "DELETE POOL" option 1510 or "OK" option 1512, the media pool application can return to a display screen similar to display screen 1400 of FIG. 14.

From display screen 1200 of FIG. 12, display screen 1300 of FIG. 13, or display screen 1400 of FIG. 14, the user may select to return to viewing a top level menu of the media pool application (e.g., by selecting "BACK" option 1220 of FIG. 12, "BACK" option 1304 of FIG. 13, or "BACK" option 1416 of FIG. 14). In response to receiving the user selection, the media pool application can, for example, return to a display screen similar to display screen 400 (FIG. 4).

Thus, referring back to FIG. 4, display screen 400 can include "MANAGE POOLS" option 410 that can allow the user to manage one or more media pools. The user may select "MANAGE POOLS" option 410 using any suitable manner (e.g., by clicking a click wheel while "MANAGE POOLS" option 410 is highlighted by highlight region 404 or by selecting "MANAGE POOLS" option 410 on a touch screen of the electronic device). The media pool application can then present a display screen associated with "MANAGE POOLS" option 410.

For example, FIG. 16 shows a display screen 1600 for managing media pools. Display screen 1600 can display lists of options 1602 and 1604, which can include options for allowing a user to change one or more attributes of media pools that have been stored on the electronic device. Thus, lists of options provided in display screen 1600(e.g., lists of options 1602 and 1604) can specify the configurations of one or more media pools. For example, the media pools can include media pools that are currently active (e.g., media pools currently connected to the electronic device). In addition, the one or more media pools can include previously formed media pools that are currently inactive. Display screen 1600 can include an indicator 1606 associated with each media pool that can indicate whether the media pool is currently active (e.g., "A" may indicate that the media pool is currently active, and "NA" may indicate that the media pool is currently inactive).

In some embodiments, the user may change an option by rotating a click wheel once the option has been selected. Persons skilled in the art will appreciate that lists of options 1602 and 1604 can include options different from or additional to the options shown in FIG. 16. Persons skilled in the art will also appreciate that the media pool application can share a list of options with any suitable media source by transmitting the list of options to the media source (e.g., a server or another electronic device in a media pool associated with the list of options).

Lists of options 1602 and 1604 can include options for editing any suitable attribute of a media pool, such as, for example, members of the media pool, media items of the media pool, one or more pre-determined thresholds of the media pool (e.g., a removal threshold for removing a media item from a media pool, an increase position threshold for increasing the position of a media item in a media pool playlist, a decrease position threshold for decreasing the position of a media item in a media pool playlist, and/or an add threshold for adding a media item to a media pool), or any combination thereof.

In some embodiments, in response to receiving a user selection of "MEDIA ITEMS" option 1608 for a media pool, the media pool application can provide a list of media items of the media pool. For example, for a currently inactive media pool, the list of media items can include all of the media items that had previously been added to the media pool. Thus, a user may be able to view information about a media item even if the user is unable to listen to the media item (e.g., the user may select to purchase the media item). As another example, the list of media items can include a most recent snapshot of media items of the media pool (e.g., media items that were in the media pool when the media pool terminated). As yet another example, the list of media items can include only the media items that were provided by the electronic device.

A "NOTIFICATION" option 1610 can be provided for allowing the user to select whether to receive a notification for a media pool. For example, by selecting a value for "NOTIFICATION" option 1610 (e.g., "YES" or "NO"), the user may select whether to receive a notification when a new user joins a media pool.

In some embodiments, list of options 1602 can include a "JOIN" option 1612 for allowing the user to select whether to automatically join a media pool. For example, by selecting "YES" for "JOIN" option 1612 for a static media pool, the media pool application can automatically join the static media pool whenever the electronic device moves within the range of a communications network where the static media pool is located (e.g., where a server of the static media pool is located).

In some embodiments, list of options 1604 can include a "CREATE" option 1614 for allowing the user to select whether to automatically create a media pool. By selecting "YES" for "CREATE" option 1614 of a temporary media pool, the media pool application can automatically create the temporary media pool when one or more conditions are satisfied. For example, the media pool application can detect when one or more electronic devices in the communications network of the electronic device are the same as members of the temporary media pool. As another example, the media pool application can detect when electronic devices in the communications network have the same or similar media items as media items of the temporary media pool. As a result of satisfying one or more conditions, the media pool application can automatically create a media pool that can be the same as or similar to the temporary media pool.

In addition, list of options 1604 can include one or more "TERMINATE" options 1616 and 1618. By selecting values for "TERMINATE" options 1616 and 1618, the user may select when to terminate the temporary media pool. For example, if the user selects a value for "TERMINATE" option 1616, the media pool application can terminate the temporary media pool when the number of media items drops below the value selected by the user. As another example, if the user selects a value for "TERMINATE" option 1618, the media pool application can terminate the temporary media pool when the number of electronic devices connected to the media pool drops below the value selected by the user.

Display screen 1600 can include "DELETE" options 1620 for allowing the user to delete one or more configurations of media pools (e.g., lists of options 1602 and 1604) that have been saved on the electronic device. In response to the user selecting a "DELETE" option 1620 for a media pool, the media pool application can delete the configuration of the media pool from memory of the electronic device (e.g., memory 304 of FIG. 3).

From display screen 1600 of FIG. 16, the user may select to return to viewing a top level menu of the media pool application (e.g., by selecting "BACK" option 1622 of FIG. 16). In response to receiving the user selection, the media pool application can, for example, return to a display screen similar to display screen 400 (FIG. 4).

Thus, referring back to FIG. 4, display screen 400 can include "SETTINGS" option 412 that can allow the user to adjust the settings of the media pool application. The user may select "SETTINGS" option 412 using any suitable manner (e.g., by clicking a click wheel while "SETTINGS" option 412 is highlighted by highlight region 404 or by selecting "SETTINGS" option 412 on a touch screen of the electronic device). The media pool application can then present a display screen associated with "SETTINGS" option 412.

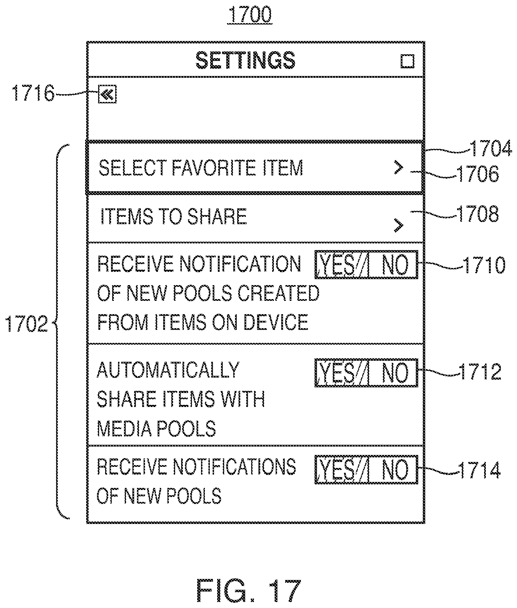

For example, FIG. 17 shows a display screen 1700 for providing one or more settings options to a user. Display screen 1700 can include list of settings options 1702. In some embodiments, the user may change an option by rotating a click wheel once the option has been selected (e.g., once the option has been highlighted by highlight region 1704). Persons skilled in the art will appreciate that list of settings options 1702 can include options different from or additional to the options provided in FIG. 17.

List of settings options 1702 can include options 1706, 1708, 1710, 1712, and 1714 that can allow a user to modify the settings of one or more features of the media pool application. Option 1706 can allow the user to select a favorite media item. Thus, in some embodiments, the media pool application can automatically transmit (e.g. stream or upload) the favorite media item to another device when a request is received (e.g., when another electronic device requests to receive a preview of a media item on the electronic device).

Option 1708 can allow the user to select one or more media items to share with other media sources. For example, the user may share one or more favorite media items, recently played media items, recently purchased media items, media items selected from a media library on the electronic device, any other suitable media items, and/or any combination thereof. Thus, when another media source requests for media items on the electronic device, the media pool application can provide only the media items that have been selected by the user. In addition, option 1710 can allow the user to select whether to receive a notification of new media pools created from media items on the electronic device.

Option 1712 can allow the user to select whether to automatically share media items (e.g., media items associated with option 1708) with media pools in the same communications network as the electronic device. Thus, if the value of option 1712 has been set to "YES", the media pool application can automatically perform one or more actions. For example, the media pool application can automatically attempt to connect to existing media pools in the communications network. In addition, the media pool application can attempt to add one or more media items to the existing media pools. As another example, the media pool application can attempt to create one or more media pools with other electronic devices in the communications network. If a connection with a media pool is successful or if the attempt to create a media pool is successful, the media pool application can add the media pool to a list of currently connected media pools (e.g., the media pool can be represented as a media pool icon in display screen 500 of FIG. 5). Thus, the handshaking with one or more media sources of the media pool can be performed in the background of the electronic device without any interruptions to the user.

In some embodiments, the media pool application can determine which media items to add and/or which media pools to create based on metadata associated with the media items and/or grouping information obtained from previously formed playlists. The media pool application can locate the metadata and playlists on one or more electronic devices, a server, an online source, any other suitable source, and/or any combination thereof.

Option 1714 can allow a user to select whether to receive a notification when a new media pool has been detected by the media pool application. For example, if the value of option 1714 has been set to "YES", the media pool application can provide a notification to the user when a new media pool has been detected in the communications network of the electronic device. In addition, when a user of the electronic device enters a new communications network, the media pool application can provide notifications of one or more media pools that are detected in the new communications network. The user may thus select to join the one or more media pools. In some embodiments, option 1714 can be inactivated when the value of option 1712 is set to "YES". Likewise, option 1712 can be inactivated when the value of option 1714 is set to "YES".

From display screen 1700, the user may select to return to viewing a top level menu of the media pool application (e.g., by selecting "BACK" option 1716 of FIG. 17). In response to receiving the user selection, the media pool application can, for example, return to a display screen similar to display screen 400 (FIG. 4).

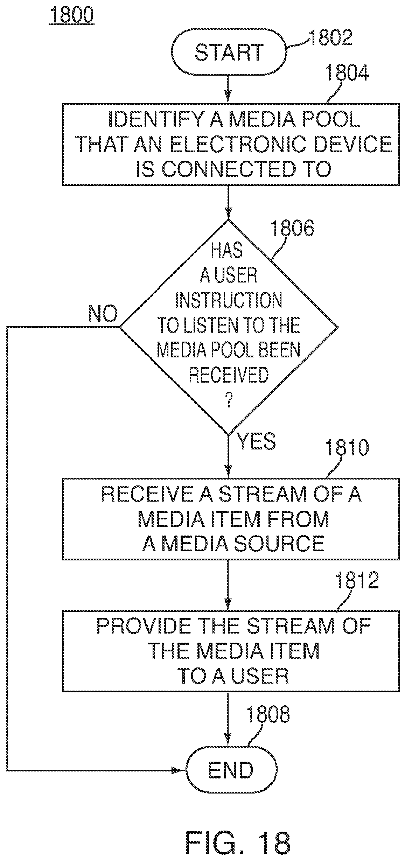

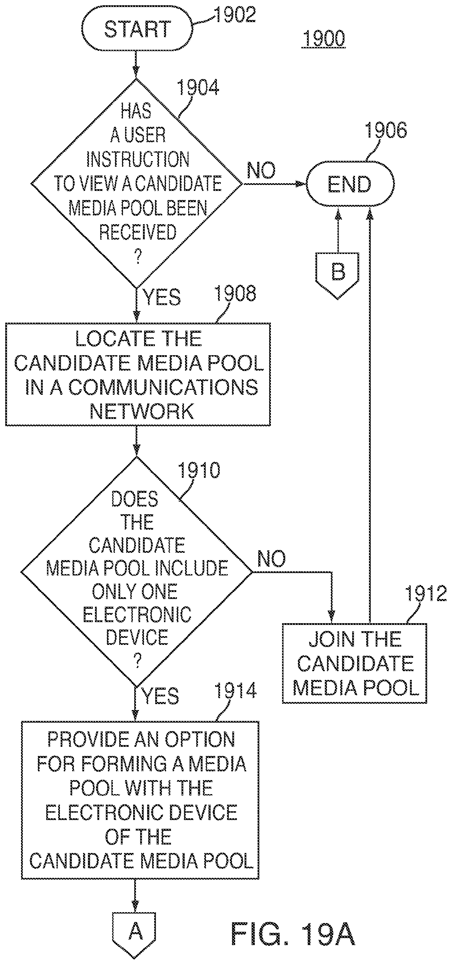

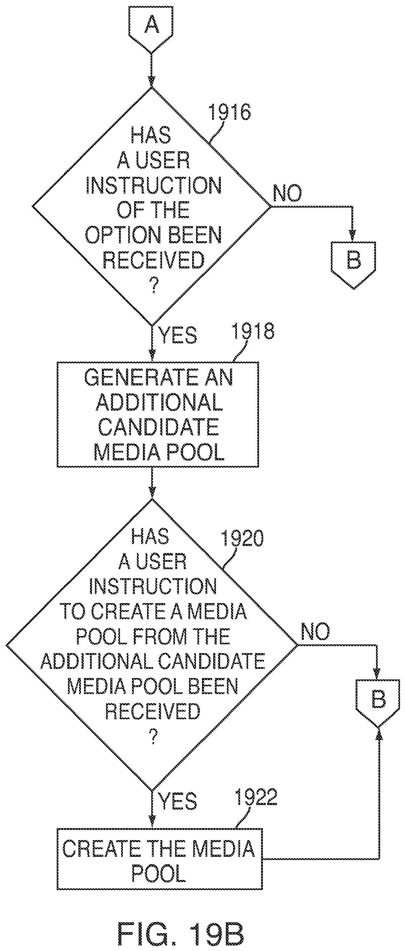

Referring now to FIG. 18 and FIGS.19A and 19B, flowcharts of illustrative processes are shown in accordance with various embodiments of the invention. The processes may be executed by an electronic device, such as any of client devices 104, 106, 108, and 110 of FIG. 1, any of electronic devices 202, 204, 206 and 208 of FIG. 2, or electronic device 300 of FIG. 3, or the steps may correspond to machine-readable instructions recorded on machine-readable media (e.g., computer-readable media, memory 304 of FIG. 3, etc.). It should be understood that these processes are merely illustrative. Any of the steps may be combined, removed, or modified, and any steps may be added, without departing from the scope of the invention.

Referring first to FIG. 18, a flowchart of illustrative process 1800 is shown for providing a stream of media items. Process 1800 may begin at step 1802. At step 1804, the media pool application can identify a media pool (e.g., media pools 116 and 118 of FIG. 1 and media pools 212 and 214 of FIG. 2) that the electronic device is connected to. For example, the media pool can be formed in a communications network (e.g., communications network 100 of FIG. 1 and communications network 200 of FIG. 2) where the electronic device may be located. In addition to identifying the media pool, the media pool application can display a media pool icon representing the media pool (e.g., media pool icons 502 and 504 of FIG. 5).

Then, at step 1806, the media pool application can determine whether a user instruction to listen to the media pool has been received. For example, the media pool application can display a "LISTEN" option for the media pool (e.g., "LISTEN" option 514 of FIG. 5). If the media pool application determines that a user instruction has not been received (e.g., the user has not selected the "LISTEN" option), process 1800 may end at step 1808.

If, at step 1806, the media pool application instead determines that a user instruction to listen to the media pool has been received (e.g., the user has selected the "LISTEN" option), process 1800 may move to step 1810.

At step 1810, the media pool application can receive a stream of a media item from a media source. For example, the media source can be a server or another electronic device in the same communications network as the electronic device.

Then, at step 1812, the media pool application can provide the stream of the media item to a user. In some embodiments, in addition to providing the stream of the media item to the user, the media pool application can provide information associated with the media item (e.g., media item information 602 of FIG. 6) to the user. Process 1800 may then end at step 1808.

FIGS. 19A and 19B are flowcharts of illustrative process 1900 for providing one or more candidate media pools. Process 1900 may start at step 1902. At step 1904, the media pool application can determine whether a user instruction to view a candidate media pool has been received. For example, the media pool application can display a "SEARCH FOR POOLS" option (e.g., "SEARCH FOR POOLS" option 408 of FIG. 4) for allowing the user to view one or more candidate media pools. If, at step 1904, the media pool application determines that a user instruction to view a candidate media pool has not been received, process 1900 may end at step 1906.

If, at step 1904, the media pool application instead determines that a user instruction to view a candidate media pool has been received (e.g., the user has selected the "SEARCH FOR POOL" option), process 1900 may move to step 1908. At step 1908, the media pool application can locate the candidate media pool in a communications network where the electronic device is located.

Continuing to step 1910, the media pool application can determine whether the candidate media pool includes only one electronic device. If, at step 1910, the media pool application determines that the candidate media pool does not include only one electronic device, process 1900 may move to step 1912.

At step 1912, the media pool application can join the candidate media pool. For example, the media pool application can automatically join the candidate media pool based on the value of one or more options of the media pool applications. For instance, the media pool application can determine that the value of an automatically join option (e.g., "JOIN" option 1612 of FIG. 16) has been set "YES". As another example, the media pool application can join the candidate media pool in response to receiving one or more user instructions (e.g., the user may have selected a "JOIN" option such as "JOIN" option 1206 of FIG. 12). Process 1900 may then end at step 1906.

Referring back to step 1910, if the media pool application instead determines that the candidate media pool does include only one electronic device, process 1900 may move to step 1914. At step 1914, the media pool application can provide an option for forming a media pool with the electronic device of the candidate media pool. For example, the media pool application can display a "FORM POOL" option (e.g., "FORM POOL" option 1218).

Then, at step 1916, the media pool application can determine whether a user instruction of the option has been received. If, at step 1916, the media pool application determines that a user instruction of the option has not been received, process 1900 may end at step 1906.

If, at step 1916, the media pool application instead determines that a user instruction of the option has been received, process 1900 may move to step 1918. At step 1918, the media pool application can generate an additional candidate media pool. For example, the media pool application can generate the additional candidate media pool based on metadata associated with a first media item of the electronic device and a second media item of the electronic device of the candidate media pool.

Continuing to step 1920, the media pool application can determine whether a user instruction to create a media pool from the additional candidate media pool has been received. For example, the media pool application can provide one or one create options (e.g., "CREATE ON SERVER" option 1410 and "CREATE ON DEVICE" option 1412 of FIG. 14) to the user. If, at step 1920, the media pool application determines that the user instruction has not been received, process 1900 may end at step 1906.

If, at step 1920, the media pool application instead determines that the user instruction has been received, process 1900 may to step 1922. At step 1922, the media pool application can create the media pool. For example, in response to receiving a user instruction of a "CREATE ON SERVER" option, the media pool application can create the media pool on a server in the communications network. As another example, in response to receiving a user instruction of a "CREATE ON DEVICE" option, the media pool application can create the media pool on the electronic device itself. Process 1900 may then end at step 1906.

The described embodiments of the invention are presented for the purpose of illustration and not of limitation.

The clauses below describe embodiments of the invention:
1. A method for generating a media pool from devices in a communications network, the method comprising:
   identifying a plurality of electronic devices in the communications network;
   identifying at least one media item locally stored on each of the plurality of electronic devices; and
   generating the media pool comprising the identified media items, wherein the media pool is accessible to each of the plurality of electronic devices.
2. The method of clause 1, wherein generating the media pool comprises:
   identifying a first media item stored on a first electronic device of the plurality of electronic devices;
   identifying a second media item stored on a second electronic device of the plurality of electronic devices;
   determining if at least one portion of metadata of the first media item matches at least one portion of metadata of the second media item; and
   in response to determining that the at least one portion of the metadata of the first media item matches the at least one portion of the metadata of the second media item, generating the media pool comprising the first media item and the second media item.
3. The method of clause 2, further comprising:
   obtaining information associated with at least one of the metadata of the first media item and the metadata of the second media item from a server; and
   generating a description of the media pool based on at least one of at least one portion of the metadata of the first media item, at least one portion of the metadata of the second media item, and the information obtained from the server.
4. The method of clause 1, further comprising:
   identifying a media item of the media pool for streaming based on at least one media ranking associated with the media item; and
   streaming the media item to each of the plurality of the electronic devices.
5. The method of clause 4, further comprising determining the at least one media ranking based on at least one request from at least one of an electronic device of the plurality of electronic devices.
6. The method of clause 1, further comprising:
   receiving a user instruction on an electronic device of the plurality of electronic devices to play back a media item of the media pool; and
   playing back the media item on the electronic device in response to the receiving.
7. A system for providing a stream of media items, the system comprising:
   a first electronic device located in a communications network operative to store a first media item;
   a second electronic device located in the communications network, the second electronic device comprising:
      an input component;
      memory operative to store a second media item; and
      control circuitry operative to:
         identify a media pool in the communications network, wherein the media pool comprises the first media item and the second media item;
         receive, from the input component, a user instruction to play back the first media item;
         receive a stream of the first media item from the first electronic device in response to receiving the user instruction; and
         provide the stream of the media item to a user.
8. The system of clause 7, wherein the control circuitry is further operative to:
   determine if the first media item is stored in the memory; and
   provide an option to add the first media item to the second electronic device in response to the determining.
9. The system of clause 8, wherein the second electronic device further comprises a communications interface, and wherein the control circuitry is further operative to:
   receive, from the input component, a user selection of the option; and
   download the first media item from the first electronic device using the communications interface in response to the receiving; and
   store the first media item in the memory.
10. The system of clause 7, further comprising a server, and wherein the control circuitry is further operative to:
   receive, from the input component, a user instruction to add the first media item to the server; and
   transmit a request to add the first media item to the server using the communications circuitry.
11. The system of clause 10, wherein the server is operative to:
   receive the request from the second electronic device;
   determine that the first media item is not stored on the server; and
   download the first media item from at least one of the first electronic device and an online source in response to the determining.
12. The system of clause 7, wherein the second electronic device is operative to:
   determine if a media ranking associated with at least one of the first media item and the second media item is below a pre-determined threshold; and
   in response to determining that the media ranking is below the pre-determined threshold, remove at least one of the first media item and the second media item from the media pool.
13. The system of clause 7, wherein the second electronic device is further operative to:
   detect if the first electronic device has moved out of the range of the communications network; and
   in response to detecting that the first electronic device has moved out of the range, locate an alternative source for the first media item.
14. The system of clause 13, wherein the second electronic device is further operative to:
   locate a copy of the first media item on another electronic device in the communications network; and
   stream the copy of the first media item.
15. The system of clause 7, wherein the second electronic device is further operative to:
   buffer the first media item in the memory;
   detect if the first electronic device has moved out of the range of the communications network; and
   in response to detecting that the first electronic device has moved out of the range of the communications network, stream the buffered media item.
16. The system of clause 15, wherein the second electronic device is further operative to transmit an updated status of the first media item.
17. The system of clause 16, wherein the second electronic device is operative to transmit the updated status by transmitting a message indicating an expiration time of the first media item.
18. The system of clause 16, wherein the second electronic device is operative to transmit the updated status by transmitting an audio indication of the updated status of the first media item.
19. A method for displaying media pools, the method comprising:
   receiving a user instruction on a first electronic device to view at least one candidate media pool;
   locating the at least one candidate media pool in a communications network to which the first electronic device is connected; and
   displaying at least one media item of the at least one candidate media pool on the first electronic device.
20. The method of clause 19, further comprising:
   detecting a second electronic device connected to the communications network; and
   in response to the detecting, providing an option on the first electronic device to form a media pool with the second electronic device.
21. The method of clause 20, further comprising:
   receiving a user selection of the option to form the media pool with the second electronic device;
   generating at least one additional candidate media pool based on metadata associated with at least a first media item on the first electronic device and metadata associated with at least a second media item on the second electronic device; and
   displaying the at least one additional candidate media pool on the first electronic device.
22. The method of clause 21, further comprising:
   receiving a user instruction to create a media pool from the at least one additional candidate media pool; and
   creating the media pool in response to the receiving.
23. The method of clause 19, further comprising:
   determining if the at least one candidate media pool comprises an existing media pool; and
   in response to the determining, displaying an option on the first electronic device to join the existing media pool.
24. The method of clause 23, further comprising:
   receiving a user selection of the option to join the existing media pool; and
   connecting to the existing media pool.
25. Machine-readable media for generating a media pool from devices in a communications network, the machine-readable media comprising machine-readable instructions recorded thereon for:
   identifying a plurality of electronic devices in the communications network;
   identifying at least one media item locally stored on each of the plurality of electronic devices; and
   generating the media pool comprising the identified media items, wherein the media pool is accessible to each of the plurality of electronic devices.

## Claims

1. A server located in a communications network for providing a stream of media items, the server comprising:
a processor configured to cause the server to:
identify a media pool in the communications network, wherein the media pool comprises a first media item of a first electronic device and a second media item of a second electronic device;
receive a stream of the first media item from the first electronic device;
provide the stream of the first media item to a user;
detect if the first electronic device has moved out of the range of the communications network; and
in response to detecting that the first electronic device has moved out of the range of the communications network, locate an alternative source for the first media item.

2. The server of claim 1, further comprising:
a memory;
wherein the processor is further configured to cause the server to:
receive a request to add the first media item to the server;
determine that the first media item is not stored on the server;
download the first media item from at least one of the first electronic device and an online source in response to the determining; and
store the first media item in the memory.

3. The server of claim 1, wherein the processor is further configured to cause the server to:
determine if a media ranking associated with at least one of the first media item and the second media item is below a pre-determined threshold; and
in response to determining that the media ranking is below the pre-determined threshold, remove at least one of the first media item and the second media item from the media pool.

4. The server of claim 1, wherein the processor is further configured to cause the server to:
in response to detecting that the first electronic device has moved out of the range, locate a copy of the first media item on another electronic device in the communications network; and
stream the copy of the first media item.

5. The server of claim 1, further comprising:
a memory;
wherein the processor is further configured to cause the server to:
buffer the first media item in the memory; and
in response to detecting that the first electronic device has moved out of the range of the communications network, stream the buffered media item to the user.

6. The system of claim 5, wherein the processor is further configured to cause the server to transmit an updated status of the first media item.

7. The system of claim 6, wherein the processor is further configured to cause the server to transmit the updated status by transmitting a message indicating an expiration time of the first media item.

8. A method for providing a stream of media items, the method comprising:
by a server located in a communications network:
identifying a media pool in the communications network, wherein the media pool comprises a first media item of a first electronic device and a second media item of a second electronic device;
receiving a stream of the first media item from the first electronic device;
providing the stream of the first media item to a user;
detecting if the first electronic device has moved out of the range of the communications network; and
in response to detecting that the first electronic device has moved out of the range of the communications network, locating an alternative source for the first media item.

9. The method of claim 8, further comprising:
by the server:
receiving a request to add the first media item to the server;
determining that the first media item is not stored on the server;
downloading the first media item from at least one of the first electronic device and an online source in response to the determining; and
storing the first media item in a memory of the server.

10. The method of claim 8, further comprising:
by the server:
determining if a media ranking associated with at least one of the first media item and the second media item is below a pre-determined threshold; and
in response to determining that the media ranking is below the pre-determined threshold, removing at least one of the first media item and the second media item from the media pool.

11. The method of claim 8, further comprising:
by the server:
in response to detecting that the first electronic device has moved out of the range, locating a copy of the first media item on another electronic device in the communications network; and
streaming the copy of the first media item.

12. The method of claim 8, further comprising:
by the server:
buffering the first media item in a memory of the server; and
in response to detecting that the first electronic device has moved out of the range of the communications network, streaming the buffered media item to the user.

13. The method of claim 12, further comprising transmitting an updated status of the first media item.

14. The method of claim 13, further comprising transmitting the updated status by transmitting an audio indication of the updated status of the first media item.

15. A computer program with instructions for performing a method of any of the claims 8 to 14.
